# FASCICULE DE BREVET EUROPEEN

(11) **EP 2 634 651 B1**
(45) Date de publication et mention de la délivrance du brevet: **12.07.2017**
(21) Numéro de dépôt: 13156200.1
(22) Date de dépôt: 21.02.2013
(51) Int. Cl.: G04B 31/012, F16C 43/04, F16C 19/16, F16C 33/60

(54) **Roulement à billes et procédé de fabrication**
Kugellager und Herstellungsverfahren davon
Ball bearing and method of manufacturing

(30) Priorité: 29.02.2012 CH 2672012
(43) Date de publication de la demande: 04.09.2013
(73) Titulaire: Soprod SA, 2350 Saignelegier (CH)
(72) Inventeur: Lombard, Yves, 25450 Damprichard (FR)
(74) Mandataire: P&TS SA (AG, Ltd.)

(56) Documents cités:
- WO-A1-03/098063
- FR-A- 1 004 592
- FR-A- 1 540 168
- GB-A- 754 285
- US-A- 2 614 898
- US-A- 3 201 185

## Description

### Domaine technique

La présente invention concerne un roulement à billes pour supporter et guider en rotation un objet de petites dimensions. Notamment, mais pas exclusivement, cette invention concerne un roulement à billes utilisable dans un mouvement horloger, par exemple pour supporter et guider une masse oscillante d'un dispositif de remontage automatique, ou un élément du rouage, un balancier, un indicateur ou tout autre élément rotatif.

### Etat de la technique

Les roulements à billes sont utilisés en maintes applications dans lesquelles on souhaite supporter et guider en rotation avec précision une pièce en réduisant le frottement. Dans la technique horlogère, on connaît plusieurs emplois des roulements à billes, notamment dans la suspension des masses oscillantes des mouvements à remontage mécanique. Les documents FR2886995 et US2005196087 décrivent des roulements pour une masse oscillante de montre à remontage automatique, dans lesquels les billes roulent entre deux bagues présentant chacune deux surfaces coniques.

L'assemblage des composants des roulements à billes connus est délicat. Le positionnement relatif des surfaces coniques doit être parfait pour permettre une rotation sans frottement des billes. Dans la plupart des roulements à bille utilisés dans la technique horlogère, les billes tournent entre une bague extérieure, présentant deux surfaces coniques en regard l'une de l'autre, et une bague intérieure composée de deux éléments séparés, chacun formant une surface conique pour le roulement des billes, et qui sont solidarisés entre eux seulement après le positionnement des billes et de la cage d'espacement. La fixation des deux éléments de la bague intérieure est réalisée, par exemple, par soudage, collage ou par leur ajustement serré, et de sa précision dépendent de façon importante les caractéristiques du roulement assemblé. Toutes les techniques d'assemblage connues comportent des stress mécaniques et/ou thermiques qui sont difficiles à maitriser complètement, et influencent négativement la précision et le frottement des roulements ainsi obtenus.

On connaît des roulements dans lesquels une bague comporte deux éléments assemblés par soudage laser. Cette technique comporte toutefois des étapes supplémentaires de préparation des surfaces, et contribue fortement aux coûts de production du roulement.

Le document WO03098063 décrit un roulement à billes pouvant être utilisé dans un mouvement d'horlogerie et comportant une bague extérieure formant une gorge dans laquelle roulent des billes sphériques, un corps de bague intérieure concentrique à l'intérieur de la bague extérieure et une bague de retenue.

Le document FR1004592 décrit un roulement à bille pour une masse oscillante comprenant une bague extérieure pouvant être sertie dans un bras de la masse de remontage. Enfin, le document US2614898 décrit un roulement comportant une bague arrangée pour être sertie.

### Bref résumé de l'invention

Un but de la présente invention est de proposer un roulement assemblé avec une technique plus simple et plus fiable des procédés d'assemblage connus.

Un autre but de l'invention est de proposer un roulement plus précis et de production plus économique des roulements connus.

Selon l'invention, ces buts sont atteints notamment au moyen de l'objet des revendications indépendantes, et notamment par un roulement comprenant les caractéristiques du préambule de la revendication 1 et dans lequel le corps de bague intérieure est solidaire avec une bague de retenue par une lèvre circulaire déformable.

Les buts de l'invention sont également atteints par un procédé d'assemblage d'un roulement comprenant les étapes énumérés dans le préambule de la revendication 7 et dans lequel on déforme une lèvre circulaire du corps de bague intérieure afin de solidariser une bague de retenue.

Cette solution présente notamment l'avantage par rapport à l'art antérieur que le roulement est assemblé sans apport de chaleur et/ou de matière extérieure, et que les stress mécaniques sont parfaitement maîtrisés et localisés. Un autre avantage de l'invention est qu'elle ne requiert pas d'outils complexes.

### Brève description des figures

Des exemples de mise en oeuvre de l'invention sont indiqués dans la description illustrée par les figures annexées dans lesquelles :
La Fig. 1 illustre de façon très schématisée et simplifiée, un dispositif de remontage automatique utilisable dans une montre-bracelet comprenant un roulement selon un aspect de l'invention.
La Fig. 2 représente le roulement de l'invention en section selon le plan A-A de la Fig. 1.

Les Fig. 3a et 3b représentent le détail B de la Fig. 1, avant et après l'opération d'assemblage.

### Exemple(s) de mode de réalisation de l'invention

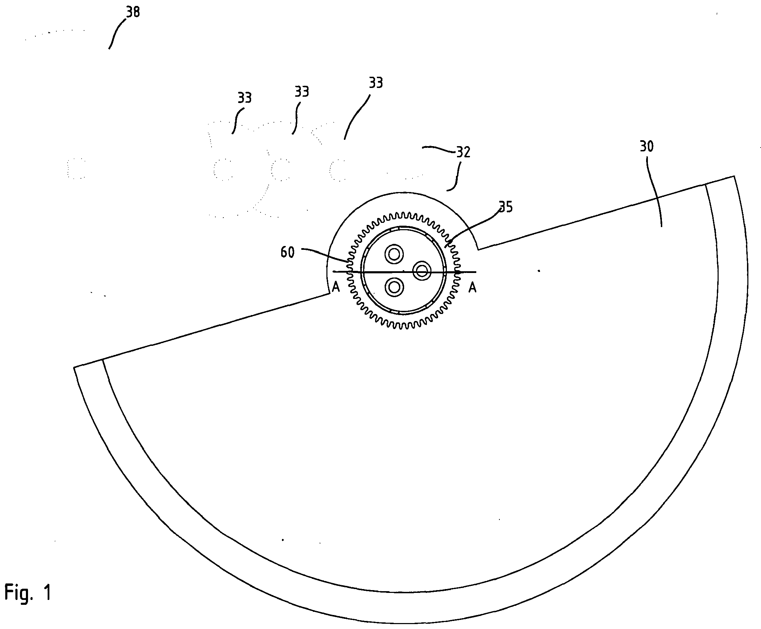

La Fig. 1 illustre, de façon très schématisée et simplifiée, un dispositif de remontage automatique utilisable dans une montre-bracelet. La masse oscillante 30 est supportée par un roulement à billes 35 fixé sur le mouvement, par exemple vissé sur une planche ou pont d'automatique. De manière connue, les mouvements du porteur provoquent entrainent en oscillation la masse oscillante 30 qui est libre de tourner autour de l'axe du roulement 35.

Les détails du fonctionnement du mécanisme de remontage automatique ne sont pas essentiels, et seront ici rappelés sommairement au seul but d'illustrer cette application importante de l'invention, laquelle peut être utilisé avec n'importe quel mouvement automatique courant. Dans l'exemple illustré, le pignon 60 solidaire de la masse oscillante 30 entraîne en rotation un système redresseur représenté schématiquement sur la figure 1 par les deux mobiles redresseurs 32. On connaît dans la technique plusieurs artifices aptes à transformer le mouvement dans les deux sens du de la masse oscillante en un mouvement de remontage unidirectionnel, employant par exemple des roues à cliquet, des pignons coulants, des embrayages unidirectionnels ou des inverseurs, dans lesquels le remontage s'opère dans un seul, ou dans les deux sens de rotation de la masse 30. Toutes ces variantes sont utilisables dans le cadre de l'invention.

Le groupe redresseur 32 es suivi par un rouage démultiplicateur comprenant les mobiles de réduction 33 afin de réduire la vitesse initiale de la masse 30 et de multiplier le couple destiné à l'armage du ressort de barillet par le rochet 38. Cette partie aussi peut inclure toutes les variantes connues dans la technique horlogère, telles que des débrayages automatiques pour permettre le remontage manuel, etc., sans sortir du domaine de l'invention.

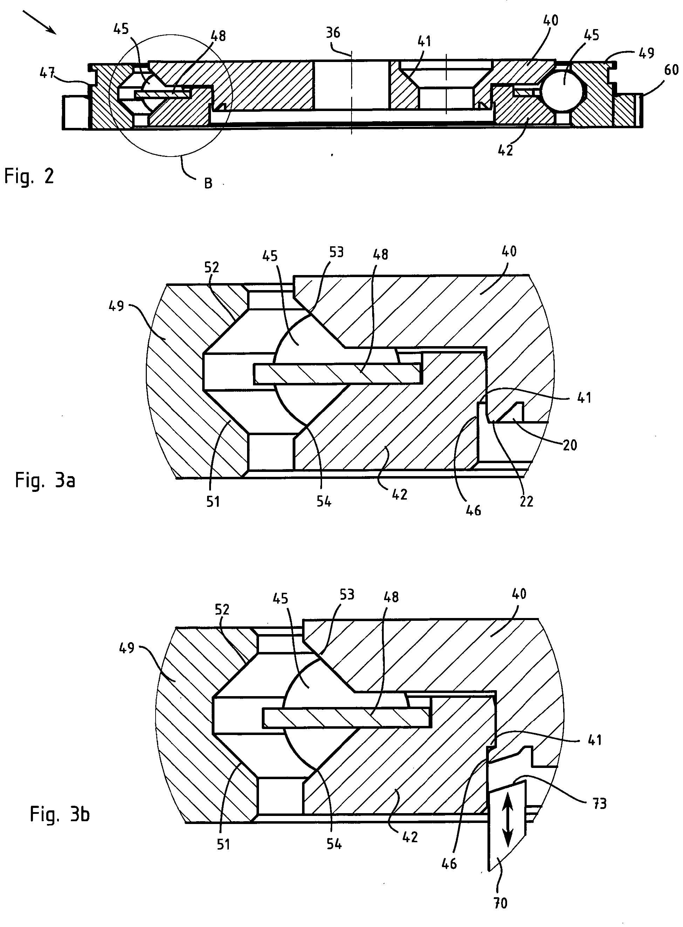

La Fig. 2 représente une coupe du roulement 35 selon le plan A-A de la figure précédente. Le roulement comporte une bague extérieure 49, par exemple réalisée en acier, à l'intérieur de laquelle sont usinées deux surfaces 51, 52, coniques dans l'exemple des figures 2 à 4, en regard l'une de l'autre. Les surfaces 51, 52 forment une gorge dans laquelle roulent les billes sphériques 45; on utilise typiquement sept billes pour un palier destiné à une montre automatique de grande dimension, et cinq billes pour les petits mouvements automatiques, mais le nombre de billes peut varier au delà de ces limites. La cage 48 a la fonction de maintenir écartées les billes 45 lors de la rotation. Les surfaces 51 et 52 sont préférablement symétriques par rapport au plan horizontal d'appui du roulement, et leur axe de révolution coïncide essentiellement avec l'axe 36 du roulement. L'angle entre les surfaces 51 et 52 est typiquement de 90°, mais d'autres valeurs et dispositions sont également possibles.

Préférablement, lorsque le roulement de la demande est utilisé dans un mouvement automatique, le pignon 60 et réalisé intégralement avec la bague extérieure 49, sur laquelle est aussi rivée ou fixée la masse oscillante 30.

A l'intérieur et concentriquement à la bague extérieure 49 est disposé un corps de bague intérieure qui comporte une surface 53 coaxiale avec les surfaces 51 et 52 et qui s'appuie aussi sur les billes 45. La quatrième surface de roulement 54 et fournie par une bague de retenue 42 séparée du corps de bague intérieure 40 afin de permettre l'assemblage du roulement. Dans l'exemple illustré par les figures, les surfaces 53, 54 sont également coniques, et le corps de bague intérieure 40 porte aussi les trous 41 pouvant loger des vis permettant de fixer le roulement 35 dans un mouvement d'horlogerie, par exemple.

Dans une modalité d'assemblage possible du roulement de l'invention, le corps de bague intérieure 40 est posé concentriquement à l'intérieur de la bague extérieure 49, et la cage 48 puis les billes 45 sont insérées dans l'espace entre les bagues, par l'espace ouvert laissé par la bague de retenue 42, qui n'est pas encore présente, de façon à que les billes touchent les trois surfaces 51, 52, 53.

La bague de retenue 42 est alors posée autour du corps de bague intérieure jusqu'à qu'elle appuie sur les billes 45 par sa surface 54, préférablement avec une force d'appui prédéterminée. Les billes 45 ont ainsi quatre points de contact avec les surfaces 51-54.

Les figures 3a et 3b illustrent un agrandissement des éléments entourés par le cercle B de la figure 2. Le corps de bague intérieure comporte une rainure circulaire 20 qui forme une lèvre 22 circulaire adjacente au diamètre sur lequel s'emboîte la bague de retenue 42. La bague de retenue 42 présente, préférablement, un épaulement 41 sur le diamètre correspondent. L'assemblage du roulement est terminé en déformant la lèvre 22 contre la surface cylindrique 46 de la bague de retenue et contre l'épaulement 41. Cette opération de sertissage solidarise la bague de retenue 42 et le corps de bague intérieure 40 de façon indémontable et précise.

Préférablement, la déformation de la lèvre 22 est effectuée à l'aide d'un outil de sertissage 70 visible sur la figure 3b. L'outil est par exemple un anneau dimensionné pour glisser autour de la bague de retenue 42 et présentant une surface inclinée 73 qui pousse la lèvre 22 vers extérieur contre la surface 46 et axialement contre l'épaulement 41.

La lèvre 22 peut également prendre la forme d'un bord crénelé permettant la formation de pattes rabattables (non représentées) propres à s'appuyez contre la surface cylindrique 46 de la bague de retenue et contre l'épaulement 41 lors de l'opération de sertissage. Dans ce cas, l'outil de sertissage 70 pourra être arrangé de sorte à ne venir pousser la lèvre 22 que sur les pattes rabattables. Un tel arrangement à l'avantage qu'une force moins élevé peut être exercé sur l'outil de sertissage 70.Le procédé d'assemblage de l'invention permet de maitriser parfaitement la force de contact entre les billes 45 et les surfaces de roulement 51-54, sans provoquer des stress mécaniques et thermiques, nuisibles pour la précision. Il a l'avantage d'être réalisable en milieu industriel avec un outillage particulièrement simple et se prête donc à la fabrication en série de roulement à billes miniaturisés pour l'horlogerie ou pour d'autres applications de micromécanique de précision.

### Numéros de référence employés sur les figures

- 20: gorge
- 22: lèvre
- 30: masse oscillante
- 32: mobiles redresseurs
- 33: mobiles de réduction
- 35: roulement à billes
- 36: axe de rotation
- 38: rochet
- 40: corps de bague intérieure
- 41: face plane, épaulement
- 42: bague de retenue
- 45: billes sphériques
- 47: gorge
- 48: cage
- 49: bague extérieure
- 51: première surface
- 52: seconde surface
- 53: troisième surface
- 54: quatrième surface
- 60: pignon de la masse oscillante
- 70: outil de sertissage
- 73: surface inclinée

## Revendications

1. Roulement à billes pour mouvement d'horlogerie, comprenant, une bague extérieure (49) dans laquelle sont usinées une première surface (51) et une seconde surface (52) en regard l'une de l'autre formant une gorge dans laquelle roulent des billes sphériques (45), un corps de bague intérieure (40) concentrique à l'intérieur de ladite bague extérieure (49) et présentant une troisième surface (53) s'appuyant sur lesdites billes (45), une bague de retenue (42) présentant une quatrième surface (54) s'appuyant sur lesdites billes (45) et en regard de la troisième surface (53), **caractérise en ce que** le corps de bague intérieure (40) comprend une lèvre (22) déformable contre la bague de retenue (42) afin de solidariser ladite bague de retenue (42) et ledit corps de bague intérieure (40) lorsque lèvre (22) est déformée, et **en ce que** la bague intérieure (40) comprend une surface supérieure et une surface inférieure dans un plan perpendiculaire à l'axe (36) du roulement, et dans lequel
la lèvre (22) est formée adjacente au diamètre sur lequel s'emboîte la bague de retenue (42) par une rainure circulaire (20), le sommet de la lèvre (22) étant dans le même plan que celui de ladite surface inférieure.

2. Roulement à billes selon la revendication précédente, dans lequel les billes (45) sont maintenues espacées par une cage (48).

3. Roulement à billes selon la revendication 1 ou 2, supportant une masse oscillante dans un dispositif de remontage automatique d'un mouvement d'horlogerie.

4. Roulement à billes selon l'une des revendications précédentes, comprenant une rainure circulaire (20) dans ledit corps de bague intérieure (40) formant ladite lèvre (22).

5. Roulement à billes selon l'une des revendications précédentes, dans lequel ladite lèvre (22) déformée s'appuie sur un épaulement (41) de la bague de retenue (42) et sur une surface latérale cylindrique (46) de ladite bague de retenue.

6. Roulement à billes selon l'une des revendications précédentes, dans lequel la lèvre (22) prend la forme d'un bord crénelé permettant la formation de pattes rabattables.

7. Procédé d'assemblage d'un roulement à billes comprenant, dans un ordre quelconque, les étapes de:
fournir une bague extérieure (49) dans laquelle sont usinés une première surface conique et une seconde surface (51, 52) en regard l'une de l'autre formant une gorge ;
positionner un corps de bague intérieure (40) ayant une troisième surface (53) concentriquement à l'intérieur de ladite bague extérieure (49), ladite bague intérieure (40) comprenant une surface supérieure et une surface inférieure dans un plan perpendiculaire à l'axe (36) du roulement et une lèvre (22) étant formée adjacente au diamètre sur lequel s'emboîte une bague de retenue (42) par une rainure circulaire (20), le sommet de la lèvre (22) étant dans le même plan que celui de ladite surface inférieure;
disposer des billes sphériques (45) dans ladite gorge en contact avec lesdites première, seconde et troisième surfaces;
poser une bague de retenue ayant une quatrième surface (54) de façon à que ce la quatrième surface (54) soit et en regard de la troisième surface (53) et s'appuie sur lesdites billes (45) ;
déformer une lèvre circulaire (22) du corps de bague intérieure contre la bague de retenue, solidarisant ainsi le corps de bague intérieure (40) et la bague de retenue (42).

8. Procédé selon la revendication précédente, dans lequel ladite étape de déformer la lèvre circulaire (22) est réalisé par un outil annulaire (70) avec une surface inclinée (73) appuyant sur la dite lèvre (22).

## Patentansprüche

1. Kugellager für ein Uhrwerk, umfassend
einen Aussenring (49), in dem eine erste Fläche (51) und eine zweite Fläche (52) gegenüber einander verarbeitet sind, die einen Kanal bilden, in welchem sphärische Kugeln (45) rollen;
einen konzentrischen Innenringkörper (40) innerhalb des besagten Aussenrings (49), und welcher eine auf den besagten Kugeln (45) ruhende dritte Oberfläche (53) aufweist;
einen Haltering (42), welcher eine auf die besagten Kugeln (45) ruhende vierte Fläche (54) gegenüber der dritten Fläche (53) aufweist,
**dadurch gekennzeichnet,**
**dass** der Innenringkörper eine gegen den Haltering verformbare Lippe (22) umfasst, um den besagten Haltering (42) und den besagten Innenringkörper (40) miteinander fest zu befestigen, wenn die Lippe (22) verformt ist,
und **dass** der Innenringkörper (40) in einer Ebene senkrecht zur Achse (36) des Lagers eine obere Fläche und eine untere Fläche aufweist,
und worin die Lippe (22) geformt ist anliegend am Durchmesser, auf welchem der Haltering (42) durch eine kreisförmige Rille (20) einrastet, wobei die Spitze der Lippe (22) auf der gleichen Ebene wie diejenige der besagten unteren Fläche liegt.

2. Kugellager gemäss dem vorhergehenden Anspruch, worin die Kugeln (45) in einem Abstand von einander durch ein Gestell gehalten werden (48).

3. Kugellager gemäss Anspruch 1 oder 2, welches eine Schwingmasse in einer automatischen Aufzugvorrichtung eines Uhrwerks trägt.

4. Kugellager gemäss einem der vorhergehenden Ansprüche, umfassend eine kreisförmige Rille (20) im besagten Innenringkörper (40), welche die besagte Lippe (22) bildet.

5. Kugellager gemäss einem der vorhergehenden Ansprüche, wobei die besagte verformte Lippe (22) auf einer Schulter (41) des Halterings (42) und auf eine zylindrische Seitenfläche (46) des besagten Halterings abgestützt ist.

6. Kugellager gemäss einem der vorangehenden Ansprüche, worin die Lippe (22) die Form einer mit Zinnen versehene Kante annimmt, was die Bildung von Faltschenkeln ermöglicht.

7. Verfahren zum Zusammenbau eines Kugellagers, umfassend, in einer beliebigen Reihenfolge, die folgenden Schritte:
einen Aussenring (49) bereitstellen, in welchem eine erste konische Fläche und eine zweite Fläche (51, 52) gegenüber einander verarbeitet sind, die einen Kanal bilden;
Positionieren eines Innenringkörpers (40) mit einer dritten Fläche (53) konzentrisch innerhalb des besagten Aussenrings (49), wobei der besagte Innenring (40) in einer Ebene senkrecht zur Achse (36) des Lagers eine obere Fläche und eine untere Fläche aufweist und eine Lippe (22) geformt ist anliegend am Durchmesser, auf welchem der Haltering (42) durch eine kreisförmige Rille (20) einrastet, wobei die Spitze der Lippe (22) auf der gleichen Ebene wie diejenige der besagten unteren Fläche liegt;
sphärische Kugeln (45) in der besagten Rille in Kontakt mit der ersten, zweiten und dritten Fläche anordnen;
einen Haltering mit einer vierten Fläche (54) platzieren, so dass die vierte Fläche (54) der dritten Fläche (53) zugewandt ist und auf den besagten Kugeln (45) ruht;
Verformen einer kreisförmigen Lippe (22) des Innenringkörper gegen den Haltering, was somit den Innenringkörper (40) und den Haltering (42) miteinander fest befestigt.

8. Verfahren gemäss dem vorhergehenden Anspruch, wobei der besagte Schritt der Verformung der kreisförmigen Lippe (22) durch ein ringförmiges und auf der besagten Lippe (22) ruhendes Werkzeug (70) mit einer geneigten Oberfläche (73) erzielt wird.

## Claims

1. Ball bearing for a timepiece movement, comprising
an outer ring (49) in which are machined a first surface (51) and a second surface (52) facing each other forming a channel in which spherical balls (45) roll,
a concentric inner ring body (40) inside of said outer ring (49) and having a third surface (53) resting on said balls (45),
a retaining ring (42) having a fourth surface (54) resting on said balls (45) and facing the third surface (53),
**characterized in that**
the inner ring body (40) comprises a lip (22) deformable against the retaining ring (42) for fixedly uniting said retaining ring (42) and said inner ring body (40) when the lip (22) is deformed;
and **in that** the inner ring (40) comprises an upper surface and a lower surface in a plane perpendicular to the axis (36) of the bearing,
and wherein the lip (22) is formed adjacent to the diameter onto which the retaining ring (42) slots by a circular groove (20), the top of the lip (22) being in the same plane as that of said lower surface.

2. Ball bearing according to the preceding claim, wherein the balls (45) are held spaced apart by a frame (48).

3. Ball bearing according to claim 1 or 2, supporting an oscillating weight in a device for automatically winding a timepiece movement.

4. Ball bearing according to one of the preceding claims, comprising a circular groove (20) in said inner ring body (40) forming said lip (22).

5. Ball bearing according to one of the preceding claims, wherein said deformed lip (22) rests on a shoulder (41) of the retaining ring (42) and on a cylindrical side surface (46) of said retaining ring.

6. Ball bearing according to one of the preceding claims, wherein the lip (22) takes the shape of a crenelated edge allowing the formation of foldable lugs.

7. Method for assembling a ball bearing comprising, in any order, the steps of:
providing an outer ring (49) in which are machined a first conical surface and a second surface (51, 52) facing one another, forming a channel;
positioning an inner ring body (40) having a third surface (53) concentrically inside said outer ring (49), said inner ring (40) comprising an upper surface and a lower surface in a plane perpendicular to the axis (36) of the bearing and a lip (22) being formed adjacent to the diameter onto which a retaining ring (42) slots by a circular groove (20), the top of the lip (22) being in the same plane as that of said lower surface;
placing spherical balls (45) in said channel in contact with said first, second and third surfaces;
placing a retaining ring having a fourth surface (54) so that the fourth surface (54) is opposite the third surface (53) and rests on said balls (45);
deforming a circular lip (22) of the inner ring body against the retaining ring, thereby fixedly uniting the inner ring body (40) and the retaining ring (42).

8. Method according to the preceding claim, wherein said step of deforming the circular lip (22) is performed by an annular tool (70) with an inclined surface (73) resting on said lip (22).
